Europäisches Patentamt

European Patent Office

Office européen des brevets

(19)

(11) Numéro de publication: **0 088 698**
**A1**

(12) # DEMANDE DE BREVET EUROPEEN

(21) Numéro de dépôt: 83400475.6

(22) Date de dépôt: 08.03.83

(51) Int. Cl.³: **B 65 D 88/12**

(30) Priorité: **08.03.82 FR 8204069**

(43) Date de publication de la demande: **14.09.83**
**Bulletin 83/37**

(84) Etats contractants désignés: **AT BE DE FR GB IT NL SE**

(71) Demandeur: **SOCIETE NOUVELLE DES ATELIERS DE VENISSIEUX, 40 boulevard Henri Sellier, F-92150 Suresnes (FR)**
Demandeur: **Etablissements FAUVET-GIREL, 40 boulevard Henri Sellier, F-92150 Suresnes (FR)**

(72) Inventeur: **Clavet, Roger, 19 rue Marcet, F-69800 Saint-Priest (FR)**

(74) Mandataire: **Dupuy, Louis et al, CREUSOT-LOIRE 15 rue Pasquier, F-75383 Paris Cedex 8 (FR)**

(54) **Conteneur à toit bâché.**

(57) Perfectionnement à la conception de la partie supérieure des conteneurs à toit bâché, dits "conteneurs open-top".

Le conteneur à toit bâché est équipé de longerons latéraux supérieurs (11) à profil en forme de Z, ces deux longerons étant positionnés, de part et d'autre du plan vertical (18) de symètrie longitudinale du conteneur, de manière à ce que le profil du longeron de droite figure un Z à l'endroit et le profil du longeron de gauche un Z retourné. Les organes (14) de fixation des arceaux transversaux (13) sont fixés sur la partie de la branche inclinée (11L) du Z regardant vers l'intérieur du conteneur. Les organes (15) de fixation de la bâche (17) sont fixés sur la partie de la branche inclinée du Z regardant vers l'extérieur du conteneur, et les faces latérales correspondantes (12) du conteneur sont fixées sur la branche horizontale inférieure (11K) du Z.

EP 0 088 698 A1

ACTORUM AG

"Conteneur à toit bâché"

La présente invention se rapporte à un perfectionnement à la conception de la partie supérieure des conteneurs à toit bâché, dits "conteneurs open-top".

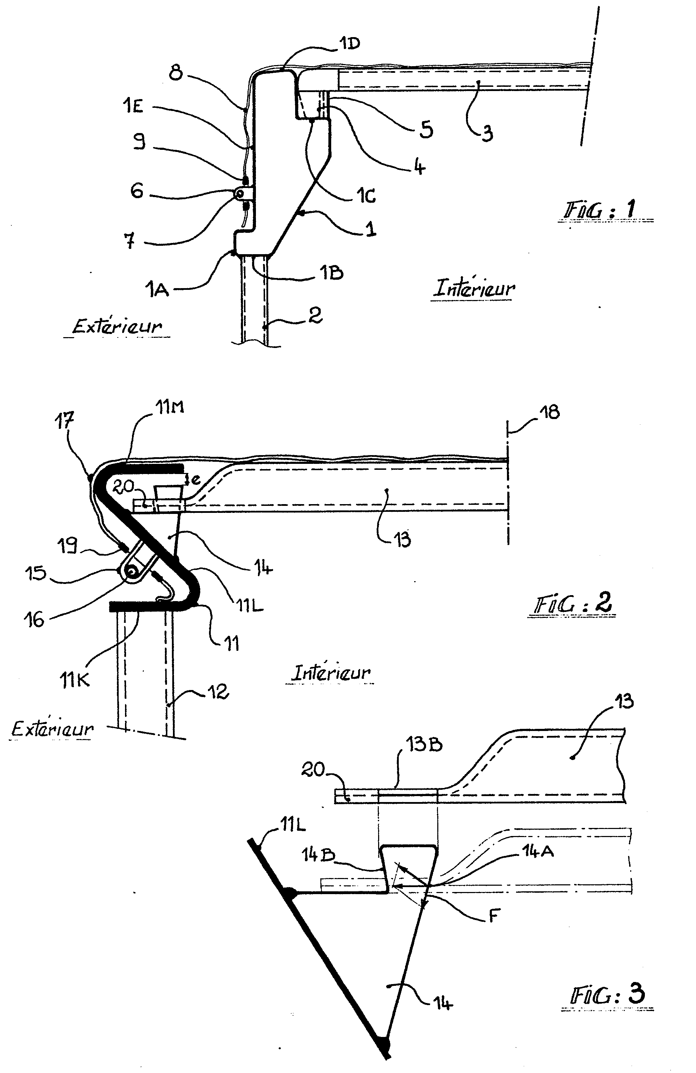

Les conteneurs à toit bâché connus actuellement, sont généralement constitués dans leur partie supérieure, comme schématisé sur la figure 1 annexée, de longerons latéraux 1 sur lesquels sont soudées les faces latérales 2 du conteneur, généralement ondulées, et dans lesquelles viennent s'enficher les arceaux transversaux 3 disposés de place en place sur toute la longueur du conteneur et destinés à soutenir la bâche 8. Les arceaux 3 sont génralement équipés d'embouts métalliques 4 destinés à permettre leur positionnement sur les longerons 1, dans des gaches ou alvéoles 5 rapportés sur celui-ci.

La face extérieure de chaque longeron 1 reçoit des pontets 6 destinés au maintien de la bâche 8 à l'aide de ses oeillets 9 et du câble de douane 7.

La réglementation douanière précise qu'il ne doit pas être possible de passer la main entre la bâche 8 et le longeron 1 et de pouvoir ainsi atteindre l'intérieur du conteneur.

Généralement, pour respecter cette prescription, la face verticale externe 1E du longeron 1 est très grande, comme figuré sur le dessin. Par ailleurs, la configuration du longeron présente les particularités suivantes, apparentes sur le dessin :

- sa partie inférieure 1B est constituée d'une partie plane destinée à la fixation par soudure des faces latérales 2.

- il comporte en 1A une partie en saillie vers l'extérieur destinée à protéger les pontets 6 des chocs

- il comporte dans sa face interne une partie creuse 1C permettant de recevoir et de protéger les gaches 5

- sa partie supérieure est composée d'une face plane 1D d'appui de la bâche.

Les arceaux 3 servent non seulement à soutenir la bâche 8, mais encore à réunir entre eux les deux longerons 1 de façon à les faire travailler simultanément en cas d'appui de la charge sur une seule face latérale, comme c'est souvent le cas lors des transports maritimes par exemple.

Ces dispositifs connus présentent l'inconvénient de nécessiter un dimensionnement imposant des longerons latéraux, ce qui entraîne un coût important de l'ensemble, ainsi qu'une réduction non négligeable du volume utile du conteneur et des possibilités de charge de pièces volumineuses par le toit ouvert.

Le conteneur à toit bâché conforme à l'invention ne présente pas cet inconvénient, tout en répondant aux mêmes impératifs que les conteneurs décrits ci-dessus. Il est caractérisé en ce qu'il est équipé de longerons latéraux supérieurs à profil en formé de Z, en ce que ces deux longerons sont positionnés, de part et d'autre du plan vertical de symétrie longitudinale du conteneur, de manière à ce que le profil du longeron de droite figure un Z à l'endroit et le profil du longeron de gauche un Z retourné, en ce que les organes de fixation des arceaux transversaux sont fixés sur la partie de la branche inclinée du Z regardant vers l'intérieur du conteneur, en ce que les organes de fixation de la bâche sont fixés sur la partie de la branche inclinée regardant vers l'extérieur du conteneur, et en ce que les faces latérales correspondantes du conteneur sont fixées sur la branche horizontale inférieure du Z.

L'invention sera mieux comprise à l'aide de la description suivante d'un exemple de réalisation, en référence aux dessins annexés dans lesquels :

- la figure 1 représente schématiquement la partie supérieure gauche d'un conteneur à toit bâché selon la technique antérieure

- la figure 2 représente schématiquement la partie supérieure gauche d'un conteneur à toit bâché conforme à l'invention

- la figure 3 est une vue agrandie du mode de fixation des arceaux du conteneur de la figure 2.

En se reportant aux figures 2 et 3, le conteneur à toit bâché de l'invention a ses longerons latéraux supérieurs, tel que le longeron gauche 11 apparaissant sur le dessin, constitués chacun par un profil en forme de Z. Ces deux longerons sont placés de part et d'autre du plan vertical de symétrie longitudinale du conteneur de manière à ce que le profil du longeron de droite, non apparent sur le dessin, figure un Z à l'endroit et le profil du longeron de gauche 11 apparent sur le dessin, figure un Z retourné.

Les faces latérales 12 du conteneur sont fixées par soudure sur la branche horizontale inférieure 11 K du Z comme figuré sur le dessin. La branche inclinée 11 L du Z reçoit, sur son côté regardant vers l'intérieur du conteneur, les pitons de fixation 14 des arceaux 13, lesdits pitons 14 y étant par exemple fixés par soudure, et sur son côté regardant vers l'extérieur du conteneur, les pontets 15 de fixation de la bâche 17 par l'intermédiaire de ses oeillets 19 et du câble de douane 16, la branche horizontale supérieure 11 M du Z servant d'appui à ladite bâche 17 comme on le voit clairement sur le dessin de la figure 2.

Comme on le voit en détail sur la figure 3, chaque arceau 13 est constitué d'un tube aplati à ses deux extrémités 20 et muni d'orifices 13 B destinés à s'emboiter sur les pitons de fixation 14. Ces pitons de fixation présentent des faces latérales 14 A et 14 B inclinées en se rétrécissant vers le bas, comme figuré sur le dessin. De la sorte, il se crée, lors du travail en compression ou en traction de l'arceau 14, une force verticale de réaction F tendant à plaquer l'arceau 13 vers le bas, comme schématisé sur la figure 3, et donc à maintenir fermement ledit arceau dans son piton 14.

Par ailleurs, le piton 14 est monté sur la branche inclinée 11 L du profil en Z de manière à ne laisser, entre sa face supérieure et la branche horizontale supérieure 11 M du Z, qu'un espace e juste nécessaire pour assurer le dégagement de l'extrémité écrasée 20 de l'arceau 13, ce qui diminue encore le risque de décrochement accidentel dudit arceau.

On voit que l'invention permet de regrouper dans un minimum d'espace toutes les fonctions souhaitées :

- protection, à l'aide de la branche supérieure 11 M du Z, des pitons de fixation des arceaux

- protection des pontets 15 de fixation de la bâche par fixation de ceux-ci par exemple par soudure, sur la branche inclinée 11L du Z.

- large surface de fixation, par exemple par soudure, des faces latérales du conteneur sur la branche inférieure 11K du Z

- impossibilité d'engager la main sous la bâche, celle-ci venant s'enrouler étroitement autour de la moitié supérieure du Z.

4

## REVENDICATIONS

1. Conteneur à toit bâché, caractérisé en ce qu'il est équipé de longerons latéraux supérieurs(11) à profil en forme de Z, en ce que ces deux longerons sont positionnés, de part et d'autre du plan vertical(18) de symétrie longitudinale du conteneur, de manière à ce que le profil du longeron de droite figure un Z à l'endroit et le profil du longeron de gauche un Z retourné, en ce que les organes(14) de fixation des arceaux transversaux(13) sont fixés sur la partie de la branche inclinée(11L) du Z regardant vers l'intérieur du conteneur, en ce que les organes(15) de fixation de la bâche(17) sont fixés sur la partie de la branche inclinée du Z regardant vers l'extérieur du conteneur, et en ce que les faces latérales correspondantes(12) du conteneur sont fixées sur la branche horizontale inférieure(11 K) du Z.

2. Conteneur selon la revendication 1, caractérisé en ce qu'il utilise des arceaux(13) à extrémités(20) aplaties et percées d'orifices (13 B) destinés à leur emboîtement sur leurs pitons de fixation(14) lesdits pitons présentant des faces latérales(14 A, 14 B) inclinées en se rétrécissant vers le bas et étant fixés sur la branche inclinée(11L) du Z de manière à ne laisser, entre leur face supérieure et la branche horizontale supérieure (11M) du Z, qu'un espace(e) juste nécessaire pour assurer le dégagement de l'extrémité(20) de l'arceau correspondant.

FIG : 1

Intérieur

Extérieur

FIG : 2

Intérieur

Extérieur

FIG : 3

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int. Cl. 3) |
|---|---|---|---|
| | | | B 65 D 88/12 |
| A | US-A-3 971 590 (YGLESIAS) <br> * Colonne 4, lignes 57-68; colonne 5, lignes 1-60; figures 1,2 * | 1 | |
| | ----- | | |

DOMAINES TECHNIQUES
RECHERCHES (Int. Cl. 3)

B 65 D
B 60 P
B 62 D
B 60 J

Le present rapport de recherche a ete etabli pour toutes les revendications

| Lieu de la recherche | Date d'achevement de la recherche | Examinateur |
|---|---|---|
| LA HAYE | 06-06-1983 | OSTYN T.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant